Europäisches Patentamt

**European Patent Office**

Office européen des brevets

(11) Publication number: **0 071 348**
**A2**

## (12) EUROPEAN PATENT APPLICATION

(21) Application number: **82303482.2**

(22) Date of filing: **02.07.82**

(51) Int. Cl.³: **F 16 F 9/36**
**F 16 J 15/00**

(30) Priority: **30.07.81 GB 8123384**

(43) Date of publication of application:
**09.02.83 Bulletin 83/6**

(84) Designated Contracting States:
**DE FR IT NL**

(71) Applicant: **LUCAS INDUSTRIES public limited company**
**Great King Street**
**Birmingham, B19 2XF(GB)**

(72) Inventor: **Nicholls, Lawrence**
**48 Arden Road**
**Acocks Green Birmingham B27 6AQ(GB)**

(74) Representative: **Spall, Christopher John et al,**
**BARKER, BRETTELL & DUNCAN 138 Hagley Road**
**Edgbaston Birmingham B16 9PW(GB)**

(54) Improvements in cylinder assemblies.

㉗ A cylinder assembly, such as an hydraulic damper, gas spring, and the like, comprises a cylinder 1 in which a piston 2 works against trapped volumes of hydraulic fluid and gas or air under pressure. The piston 2 is carried by the inner end of a piston-rod 3, and the piston-rod 3 passes through a removable closure 5 for the upper end of the cylinder 1, and works through a seal 18 at the inner end of a tubular member 7 which depends from the closure 5. A sealing ring 8 provides a fluid-tight seal between the closure 5, the cylinder 1, and a radial flange 9 at the adjacent end of the tubular member 7. The sealing ring 8 has a tongue 13 which normally seals against a region surrounding an aperture 14 in the flange 9 to prevent fluid escaping from the cylinder 1, and the tongue 13 is resiliently deflectable upon release of the closure 5 to permit gas or air to escape through the aperture 14 at a controlled rate.

FIG 2

## IMPROVEMENTS IN CYLINDER ASSEMBLIES

This invention relates to improvements in cylinder assemblies, such as hydraulic dampers, gas springs, and the like, of the kind in which a piston adapted to work in a cylinder is carried by a piston-rod which passes through a closure for one end of the cylinder and volumes of gas or air and hydraulic fluid under pressure are retained within the cylinder, the piston being provided with at least one valve or restrictor which permits a limited flow of hydraulic fluid past the piston in both directions in response to relative movement between the piston and the cylinder, the volume of the gas or air being retained within an annular gas chamber defined between the cylinder and an inner tubular member which depends from the closure, and the gas or air being compressible to accommodate fluid displaced within the cylinder by the volume of the entering piston-rod.

In cylinder assemblies of the kind set forth it is desirable for the closure to be removable in order to service the assembly and for example, to enable us to replace the piston, the piston-rod, the tubular member and associated seal with a sealed cartridge. Care must however be taken when removing the closure in order to prevent it from being blown-off by the pressure of the trapped fluid medium, with consequent danger to personnel and the risk of damage to the assembly itself and other components.

In our G.B. Patent Specification No. 2067262, published 22nd July 1981, fluid is permitted to flow out of the cylinder of a suspension strut assembly at a controlled rate by passage through a leak path when the closure is unscrewed from the cylinder through a sufficient distance for a static seal to be released from providing a sealing engagement between the closure and the cylinder, the leak path being defined by axial recesses in the closure.

According to our invention in a cylinder assembly of the kind set forth the closure is removable from the cylinder, and a seal located between the closure and the adjacent end of the tubular member provides a fluid tight seal between the cylinder and adjacent faces of the closure and the tubular member, the seal being provided with a flow control portion which is adapted to seal against a region surrounding an aperture in the tubular member, normally to prevent gas or air from escaping from the gas chamber at least at that end, and the flow control portion being resiliently deflectable upon release of the closure to permit gas or air to escape through the aperture and to atmosphere at a controlled rate.

The gas or air can escape from the assembly through a leak path defined by screw-threads between the closure and the cylinder, in constructions in which the closure is screw-threadably engaged in the cylinder.

Alternatively, or in addition, a vent opening may be provided in the wall of the cylinder at a position spaced from the face of the seal which is remote from the tubular member.

In one construction the tubular member is provided at the end adjacent to the closure with a outwardly directed radial flange, and the seal is of generally U-section comprising a ring having a pair of axially spaced flanges which embrace the outer edge of the flange of the tubular member and of which the outer flange is adapted to be clamped against the closure, a contiguous portion interconnecting the outer edges of the flanges and adapted to seal against the cylinder, and a tongue projecting inwardly from the inner edge of the outer flange and defining the flow control portion.

The tongue may carry a small projection for location within the aperture. In such a construction, during assembly, the projection is located in the aperture to ensure that the tongue is correctly orientated with respect to the tubular member, and the location of the projection within the aperture enhances the sealing effect.

One embodiment of our invention is illustrated in the accompanying drawings in which:-

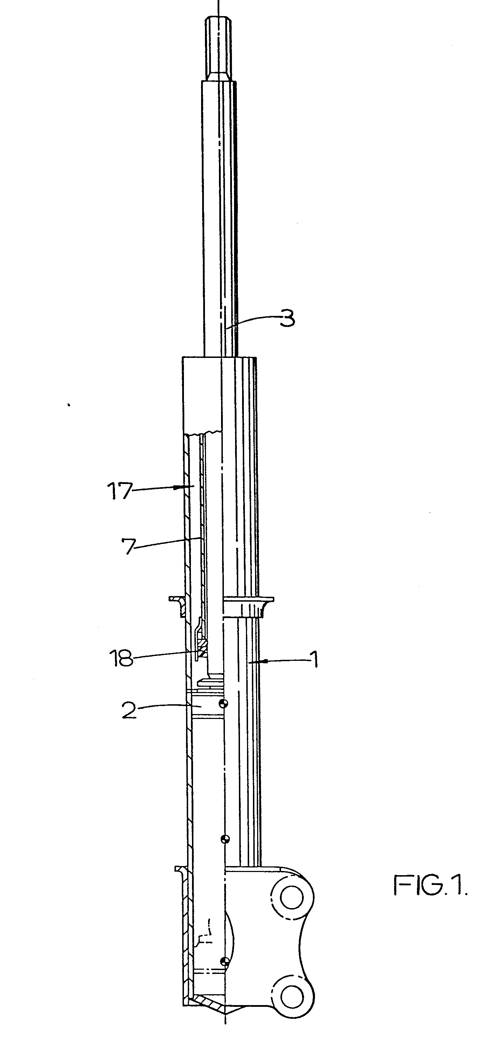

Figure 1 is a side view of a suspension strut for a vehicle including a half section;

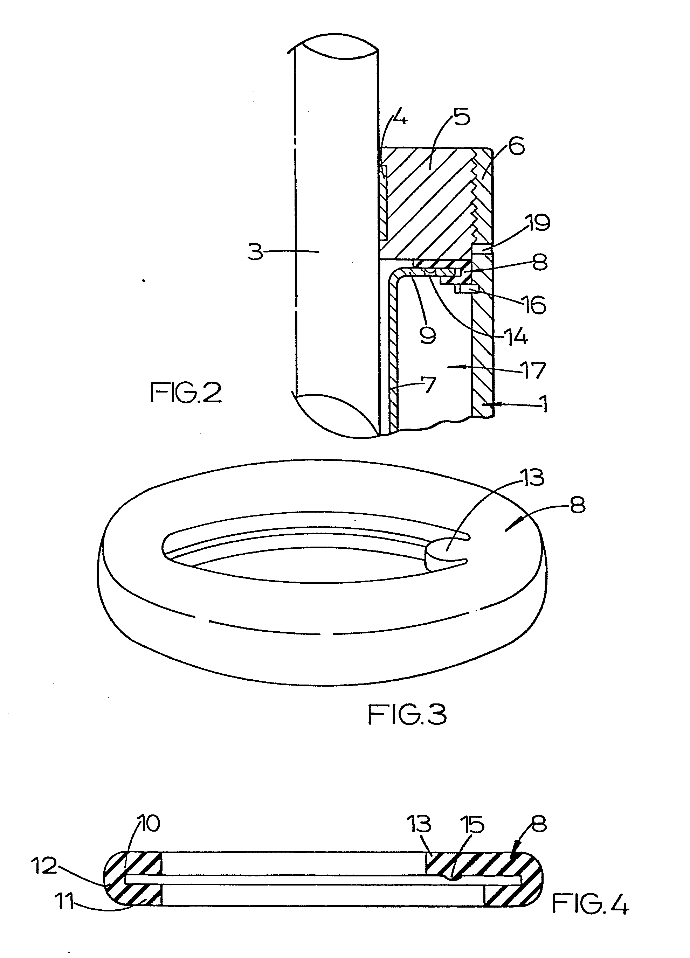

Figure 2 is a longitudinal section of a portion of one end of the suspension strut of Figure 1;

Figure 3 is a perspective view of the sealing ring of the suspension strut; and

Figure 4 is a transverse section through the sealing ring.

The suspension strut illustrated in the drawings comprises a cylinder 1 which is closed at its lower end and in which works a piston 2. The piston 2 is carried by the inner end of a piston-rod 3 which works through a bearing 4 incorporated in a closure member 5 for the adjacent, upper, end of the cylinder 1. The closure member 5 comprises a plug which is screwed into a screw- threaded portion 6 at the said upper end of the cylinder 1.

A tubular member 7 depends downwardly from the plug 5 and a seal 8 is disposed between the cylinder 1 and adjacent faces of the tubular member 7 and the plug 5. As illustrated the tubular member 7 is provided at its upper end with an outwardly directed radial flange 9. The seal 8 comprises a sealing ring of U cross-section which includes spaced upper and lower flanges 10 and 11 which embrace the outer edge of the flange 9, and an integral contiguous peripheral portion 12 which interconnects the flanges 10 and 11 at their outer edges. A deformable tongue 13 projecting inwardly from the inner edge of the upper flange 10 is superimposed over an aperture 14 in the flange 9, and a small projection constituted by a pip 15 on the inner side of the tongue 13 is adapted to be received in the aperture 14.

When the plug 5 is screwed home into the cylinder 1 the upper flange 10 is sealingly clamped between the closure 5 and the flange 9, the lower flange 11 engages with a stop abutment ring 16 in the cylinder 1, the peripheral portion 12 seals against the cylinder 1, and the tongue 13 is clamped against a region surrounding the aperture 14 to prevent flow through the aperture 14.

The piston 2 works against a volume of hydraulic fluid in the cylinder 1 and is provided with at least one valve or restrictor to permit a limited flow of hydraulic fluid past the piston 2 in both directions in response to relative movement between the piston 2 and the cylinder 1. The hydraulic fluid is pressurised by a volume of gas or air under pressure which is retained within a gas chamber 17 defined between the cylinder 1 and the tubular member 7. The tubular member 7 at its inner end terminates short of the adjacent end of the cylinder 1 and, at that end, carries a seal 18 through which the piston-rod 3 also works. The level of hydraulic fluid is always above the upper end of the seal 18 to define the lower end of the gas chamber 17. A suspension strut of this kind is covered by our GB Patent Application No. 8115717.

When the closure 5 is unscrewed to remove it from the cylinder 1, during the initial movement of the closure 5 away from the flange 9, the tongue 13 is deflected away from the flange 9 by the pressure of the gas or air which then escapes through the aperture 14 at a controlled rate and to atmosphere through the screw-threads. Some hydraulic fluid may also escape at the same time. After the suspension strut has been de-pressurised the closure 5 can be removed completely from the cylinder, to enable the tubular member 7 and the seal 18, the seal 8, the piston 2 and the piston-rod 3 to be removed and replaced with a sealed cartridge.

In addition, to facilitate de-pressurisation, an exhaust port 19 is provided in the wall of the cylinder 1, at a point above the seal 8 when the seal 8 is in the operative position illustrated.

The seal 8 comprises a one-piece moulding of an elastomeric material.

## CLAIMS

1.    A cylinder assembly in which a piston adapted to work in a cylinder is carried by a piston-rod which passes through a closure for one end of the cylinder and volumes of gas or air and hydraulic fluid under pressure are retained within the cylinder, the piston being provided with at least one valve or restrictor which permits a limited flow of hydraulic fluid past the piston in both directions in response to relative movement between the piston and the cylinder, the volume of the gas or air being retained within an annular gas chamber defined between the cylinder and an inner tubular member which depends from the closure, and the gas or air being compressible to accommodate fluid displaced within the cylinder by the volume of the entering piston-rod, characterised in that the closure (5) is removable from the cylinder (1), and a seal (8) located between the closure (5) and the adjacent end of the tubular member (7) provides a fluid tight seal between the cylinder (1) and adjacent faces of the closure (5) and the tubular member (7), the seal (8) being provided with a flow control portion (13) which is adapted to seal against a region surrounding an aperture (14) in the tubular member (7), normally to prevent gas or air from escaping from the gas chamber at least at that end, and the flow control portion (13) being resiliently deflectable upon release of the closure (5) to permit gas or air to escape through the aperture and to atmosphere at a controlled rate.

2.    A cylinder assembly according to Claim 1, characterised in that a vent opening (19) is provided in the wall of the cylinder (1) at a position spaced from the face of the seal (8) which is remote from the tubular member (7).

3.  A cylinder assembly according to Claim 1 or Claim 2, characterised in that the closure (5) is screw-threadably engaged in the cylinder (1), and the gas or air can escape from the assembly through a leak path defined by the screw-threads between the closure (5) and the cylinder (1).

4.  A cylinder assembly according to any preceding claim characterised in that the tubular member (7) is provided at the end adjacent to the closure with a outwardly directed radial flange (9), and the seal (8) is of generally U-section comprising a ring having a pair of axially spaced flanges (10, 11) which embrace the outer edge of the flange (9) of the tubular member (7) and of which the outer flange is adapted to be clamped ·against the closure, a contiguous portion (12) interconnecting the outer edges of the flanges and adapted to seal against the cylinder, and a tongue (13) projecting inwardly from the inner edge of the outer flange and defining the flow control portion.

5.  A cylinder assembly according to Claim 4, characterised in that the tongue (13) carries a small projection (15) for location within the aperture (14).

0071348

1/2

3

17

7

18

2

1

FIG.1.

**FIG.2**

**FIG.3**

**FIG.4**